# EUROPÄISCHE PATENTANMELDUNG

(11) **EP 0 564 772 A1**
(43) Veröffentlichungstag der Anmeldung: **13.10.1993**
(21) Anmeldenummer: 93101804.8
(22) Anmeldetag: 05.02.1993
(51) Int. Cl.: B64C 25/12

(54) **Hauptfahrwerk für ein Flugzeug mit weit hinten liegendem Schwerpunkt**

(30) Priorität: 07.04.1992 DE 4211623
(71) Anmelder: Deutsche Aerospace Airbus Gesellschaft mit beschränkter Haftung, D-21129 Hamburg (DE)
(72) Erfinder: Renken, Jürgen, Dr., W-2730 Freyersen 12 (DE); Roloff, Gerd, W-2000 Hamburg 95 (DE)

(57) **Zusammenfassung**

Bei einem Hauptfahrwerk für ein Flugzeug mit weit hinten liegendem Schwerpunkt mit einem Federbein und einem Rad oder Radpaar angeordnet ist, das sich in seiner Stauposition teils im Flügel, teils im Rumpf befindet, besteht die Erfindung darin, daß innerhalb des Flügels ein um eine zur Flugzeuglängsachse parallele Achse schwenkbarer Traglenker 17 angeordnet ist, der seinerseits zwei Anlenkpunkte 21,22 für eine aktive Strebe 14 und für das Federbein 13 aufweist, so daß deren Achsen mit der Verbindungslinie der Anlenkpunkte 21,22 ein Dreieck bilden und das Hauptfahrwerk durch Schwenken des Traglenkers 17 um die Achse 20 mit dem Federbein 13 und den Rädern 12 in eine Zwischenstellung A ausschwenkbar ist und das Federbein 13 mit den Rädern 12 anschließend durch Betätigung der aktiven Strebe 14 um den Anlenkpunkt 22 in eine ausgefahrene Position A bringbar ist.

Dabei ist insbesondere vorteilhaft, daß das Hauptfahrwerk vollständig einfahrbar ist, und somit keine Gondeln oder Ausbuchtungen der Flugzeugoberfläche erfordert.

## Beschreibung

Die Erfindung bezieht sich auf ein Hauptfahrwerk für ein Flugzeug mit weit hinten liegendem Schwerpunkt gemäß dem Gattungsbegriff des Anspruchs 1.

Im Flugzeugbau werden beim Stand der Technik vorzugsweise zwei Hauptgruppen von Hauptfahrwerken verwendet, die sich sehr bewährt haben, nämlich sogenannte Teleskopfahrwerke einerseits und sogenannte Schwingenfahrwerke andererseits. Bei bestimmten Flugzeugtypen sind auch spezielle Mischformen der beiden Hauptgruppen bekannt geworden.

Bei Flugzeugen mit sehr weit hinten liegendem Schwerpunkt, beispielsweise bei Flugzeugen mit Propfanantrieb, treten in Bezug auf die Fahrwerksanbringung diverse Probleme auf. Zum einen muß die Spurweite ausreichend sein, um die geforderte Querstabilität sicherzustellen und zum anderen muß der Radaufstandspunkt weit genug hinten liegen, so daß infolge der damit verbundenen größeren Bugradlast eine ausreichende Längsstabilität erreicht wird. Zur Erzielung einer hohen Kurvengeschwindigkeit während des Rollens am Boden ist eine möglichst große Spurweite gefordert, was zwangsläufig eine Montierung an den Flügeln nahelegt. Gemäß diesem Erfordernis sind beispielsweise die Flugzeugtypen TU 134/ 154 dem Stand der Technik gefolgt, wobei zur Aufnahme der Fahrwerke flügelmontierte Gondeln mit entsprechendem Raumbedarf vorgesehen sind. Diese Lösung bewirkt eine Verschlechterung der aerodynamischen Verhältnisse.

Es sind auch Hauptfahrwerke bekannt, wie beispielsweise beim Airbus A 320, die in eingefahrenem Zustand teils im Flügel und teils im Rumpf verstaut sind. Diese Lösung ist aber prinzipiell nicht brauchbar, wenn das betreffende Flugzeug einen sehr weit hinten liegenden Schwerpunkt aufweist.

Der vorliegenden Erfindung liegt nun die Aufgabe zugrunde, ein Hauptfahrwerk der eingangs genannten Art so zu schaffen, daß es ein Flugzeug mit sehr weit hinten liegendem Schwerpunkt sicher tragen kann, bei gleichzeitiger Gewährleistung einer optimalen Belastung des Bugrades und aerodynamisch guter Verhältnisse.

Diese Aufgabe wird durch die im Anspruch 1 aufgezeigten Maßnahmen gelöst. Dabei ist insbesondere von Vorteil, daß das Hauptfahrwerk vollständig einfahrbar ist, und somit keine Gondeln oder Ausbuchtungen der Flugzeugoberfläche erfordert. In den Unteransprüchen sind Ausgestaltungen und Weiterbildungen aufgezeigt und in der nachfolgenden Beschreibung ist ein Ausführungsbeispiel erläutert und in den Figuren der Zeichnung dargestellt. Es zeigen:
- Fig. 1: eine Teilseitenansicht des in Fahrtrichtung gestellten Hauptfahrwerks mit strichliert gezeichneten Radstellungen von der Einfahrstellung bis zur voll ausgefahrenen Radstellung bei maximaler Belastung und
- Fig. 2: eine Teilansicht des Hauptfahrwerks von der Heckseite aus in Fahrtrichtung gesehen, mit strichliert gezeichneten Radstellungen der einzelnen Ein- und Ausfahrphasen mit und ohne Belastung.

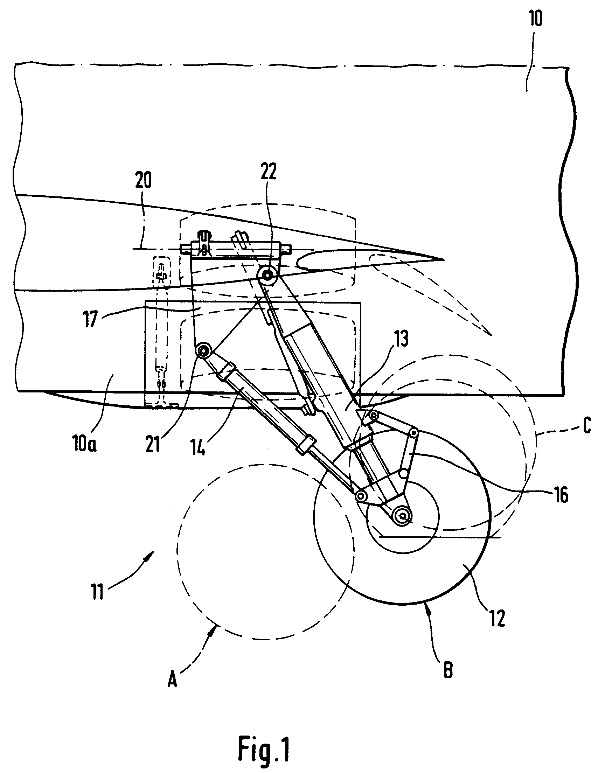

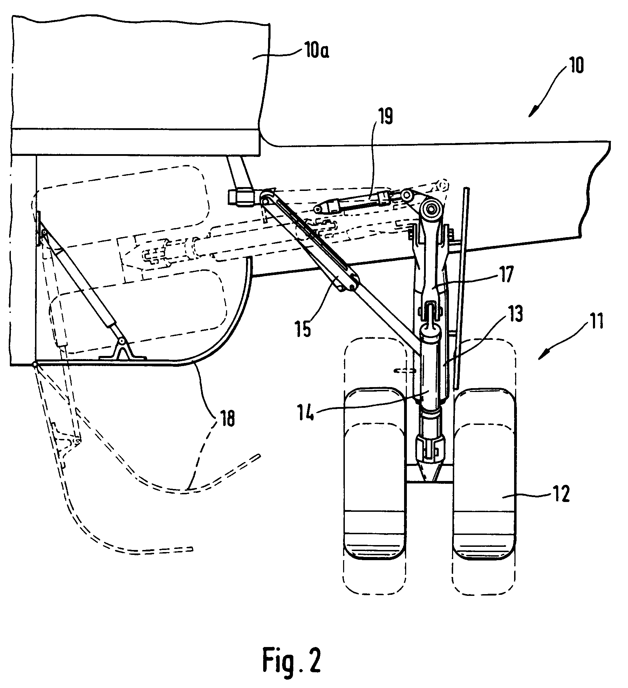

Wie aus den Figuren 1 und 2 der Zeichnung ersichtlich ist, handelt es sich bei dem nachfolgend beschriebenen Ausführungsbei spiel eines Hauptfahrwerks um ein sogenanntes flügelmontiertes Hauptfahrwerk, wie es bei Tiefdeckern - beispielsweise Airbus A 320 - an sich gebräuchlich ist. Durch diese Anbringungsart erfolgt in optimaler Weise die Krafteinleitung über den Flügel in den Rumpf und die dadurch ermöglichte große Spurweite gewährleistet ein sicheres Rollen am Boden.

Eingehende Untersuchungen haben nun gezeigt, daß die bei flügelmontierten Gondeln schlechten aerodynamischen Verhältnisse eliminiert werden können, wenn ein Hauptfahrwerk geschaffen wird, das eine Montage am Flügel und ein vollständiges Einfahren in den Rumpf bzw. in den Flügel erlaubt. Um dies zu ermöglichen wird nun vorgeschlagen, das Hauptfahrwerk 11 des Flugzeugs 10 mit weit hinten liegendem Schwerpunkt nur aus Zug- und Druckstreben zusammenzusetzen. Dadurch kann das Hauptfahrwerk bei gleichbleibender Belastungsaufnahme wesentlich leichter ausgeführt werden, als etwa ein mit "Biegebalken" ausgestattetes Schwingenfahrwerk, wie es beispielsweise bei der BAe 146 verwirklicht ist.

Die Figuren 1 und 2 zeigen eine Ausgestaltung des Hauptfahrwerks. Hier ist veranschaulicht, wie das Hauptfahrwerk 11 um eine zur Längsachse des Flugzeugs 10 parallele Achse 20 aus dessen Rumpf 10a ausschwenkbar angeordnet ist. Das Aus- und Einfahren dieses Hauptfahrwerks 11 erfolgt in üblicher Weise durch einen hydraulischen Aktuator 19. Die Bodenklappe 18 wird durch einen separaten Aktuator bewegt.

Beim Ausfahren wird das Hauptfahrwerk 11 aus dem Rumpf bis zur Zwischenstellung A ausgeschwenkt und mittels der aktiven Strebe 14 werden dann das Federbein 13 mit den Rädern 12 in die Endposition B gebracht. Das Hauptfahrwerk ist nun so dimensioniert, daß die Räder 12 bei der Landung - d.h. bei der höchsten auftretenden Belastung - die strichliert gezeichnete Stellung C einnehmen können. Dies wird dadurch ermöglicht, daß alle Streben 13 bis 16 gelenkig gelagert sind.

An einem um eine Achse 20 schwenkbar gelagerten Traglenker 17 ist sowohl das Federbein 13 als auch die aktive Strebe 14 befestigt, die vorzugsweise als doppeltwirkender Hydraulikzylinder ausgebildet ist. Dabei sind die Anlenkpunkte der aktiven Strebe 14 und des Federbeins 13 mit 21 bzw. 22 bezeichnet. Die Achsen des Federbeins 13 und der Strebe 14 bilden mit der Verbindungslinie der Anlenkpunkte 21 und 22 ein Dreieck. Vor der Landung werden die Räder 12 durch Ausschwenken aus dem Rumpf in die Zwischenstellung A gebracht. Anschließend wird die aktive Strebe 14 betätigt, wodurch die Räder 12 die ausgefahrene Position B einnehmen. In dieser Stellung wird die Strebe 14 mechanisch verriegelt, so daß keine Längenänderung mehr möglich ist. Beim Aufsetzen der Räder 12 auf der Landepiste bewegen sich diese während des Einfederns schräg nach hinten. Alle Streben 13 bis 16 des Hauptfahrwerks 11 sind so angeordnet und gelagert, daß sie ausschließlich auf Zug- oder Druck belastet werden. Der Einfahrvorgang erfolgt analog zum Ausfahrvorgang und erfordert keine weitere Erläuterung. Hierdurch gelangt das Hauptfahrwerk in die in Fig. 2 strichlierte Stauposition, wobei es sich dann teils im Flügel, teils im Rumpf befindet.

## Patentansprüche

1. Hauptfahrwerk für ein Flugzeug mit weit hinten liegendem Schwerpunkt, das sich aus einem Federbein mit einem Rad oder Radpaar sowie aus Hebeln, Streben und Gelenken zusammensetzt und sich in seiner Stauposition teils im Flügel, teils im Rumpf befindet, **dadurch gekennzeichnet**, daß innerhalb des Flügels ein um eine zur Flugzeuglängsachse parallele Achse (20) schwenkbarer Traglenker (17) angeordnet ist, der seinerseits zwei Anlenkpunkte (21,22) für eine aktive Strebe (14) und für das Federbein (13) so aufweist, daß deren Achsen mit der Verbindungslinie der Anlenkpunkte (21,22) ein Dreieck bilden und das Hauptfahrwerk durch Schwenken des Traglenkeres (17) um die Achse (20) mit dem Federbein (13) und den Rädern (12) in eine Zwischenstellung (A) ausschwenkbar ist und das Federbein (13) mit den Rädern (12) anschließend durch Betätigung der aktiven Strebe (14) um den Anlenkpunkt (22) in eine ausgefahrene Position (B) bringbar ist.

2. Hauptfahrwerk nach Anspruch 1,
**dadurch gekennzeichnet**, daß insbesondere das Federbein (13) und alle Streben (14-16) des Hauptfahrwerks (11) so angeordnet sind, daß sie nur auf Zug und Druck belastet werden.

3. Hauptfahrwerk nach Anspruch 1 oder 2,
**dadurch gekennzeichnet**, daß die aktive Strebe (14) als doppeltwirkender Hydraulikzylinder ausgebildet ist.
